Europäisches Patentamt

European Patent Office

Office européen des brevets

(19)

(11) Veröffentlichungsnummer: **0 143 254**
**B1**

(12)

# EUROPÄISCHE PATENTSCHRIFT

(45) Veröffentlichungstag der Patentschrift:
28.10.87

(21) Anmeldenummer: **84111475.4**

(22) Anmeldetag: **26.09.84**

(51) Int. Cl.⁴: **H 04 B 3/23,** H 04 B 3/20,
H 04 L 1/20

(54) Schaltungsanordnung zur Steuerung der Übertragungsfähigkeit des Empfangszweiges einer Übertragungseinrichtung.

(30) Priorität: **29.09.83 DE 3335391**
**22.02.84 DE 3406407**

(43) Veröffentlichungstag der Anmeldung:
**05.06.85 Patentblatt 85/23**

(45) Bekanntmachung des Hinweises auf die Patenterteilung:
**28.10.87 Patentblatt 87/44**

(84) Benannte Vertragsstaaten:
**AT BE CH DE FR GB IT LI NL SE**

(56) Entgegenhaltungen:
**FR - A - 2 408 249**
**US - A - 3 754 105**
**US - A - 4 005 277**
**US - A - 4 276 450**
**US - A - 4 282 411**

(73) Patentinhaber: **Siemens Aktiengesellschaft Berlin und München, Wittelsbacherplatz 2, D-8000 München 2 (DE)**

(72) Erfinder: **Haass, Adolf, Eichelhäherstrasse 54, D-8000 München 60 (DE)**

## Beschreibung

Die Erfindung bezieht sich auf eine Schaltungsanordnung zur Steuerung der Übertragungsfähigkeit des Empfangszweiges einer Übertragungseinrichtung, die mit ihrem Empfangszweig und mit einem Sendezweig über eine Gabelschaltung mit einer Zweidraht-Übertragungsleitung verbunden ist, wobei zwischen dem Sendezweig und dem Empfangszweig der Übertragungseinrichtung ein Echo-Kompensationsnetzwerk vorgesehen ist und wobei in dem Empfangszweig ein Verstärker vorhanden ist.

Schaltungsanordnungen der vorstehend bezeichneten Art sind generell bereits bekannt (siehe zum Beispiel «IEEE Transactions on Communications», Vol. Com. 30, No. 9, September 1982, Seiten 2083 bis 2094). Bei diesen bekannten Schaltungsanordnungen hat sich nun eine Schwierigkeit herausgestellt, wenn bei diesen Schaltungsanordnungen nach einem Leitungsbruch auf der jeweiligen Zweidraht-Übertragungsleitung der ordnungsgemässe Betrieb wieder aufgenommen wird. Infolge eines derartigen Leitungsbruchs wird nämlich das jeweilige Echo-Kompensationsnetzwerk so eingestellt, dass für den betreffenden Leitungsbruchfall eine exakte Kompensation der vom zugehörigen Sendezweig abgegebenen und in den zugehörigen Empfangszweig übersprechenden Signalanteile erfolgt. Nach einer Wiederinbetriebnahme der zuvor unterbrochenen Zweidraht-Übertragungsleitung muss sich dann das jeweilige Echo-Kompensationsnetzwerk erst wieder auf die veränderten Verhältnisse einstellen, bis von einer als Gegenstelle zu bezeichnenden anderen Teilnehmerstelle abgegebene Datensignale fehlerfrei empfangen werden können. Um in diesem Fall zu verhindern, dass fehlerhafte Datensignale an die mit einer Schaltungsanordnung der betrachteten Art verbundene Datenendeinrichtung gelangen, muss während des zuletzt erwähnten Kompensationsvorganges der Datensignalempfang gesperrt werden, wozu beispielsweise ein Zeitglied verwendet werden kann. Damit lässt sich jedoch nicht eine den jeweiligen tatsächlichen Verhältnissen entsprechende Zeitspanne festlegen, während der der Datensignalempfang gesperrt ist bzw. werden soll.

Der Erfindung liegt demgemäss die Aufgabe zugrunde, einen Weg zu zeigen, wie auf relativ einfache Weise mit einem Datensignalempfang erst ab dem Zeitpunkt begonnen werden kann, zu dem das Echo-Kompensationsnetzwerk bereits exakt eingestellt ist und der Pegel einen bestimmten Schwellwert überschritten hat, also im zugehörigen Empfangszweig vorgenommene Einstellvorgänge ein vorgegebenes Ausmass unterschritten haben.

Gelöst wird die vorstehend aufgezeigte Aufgabe ausgehend von einer Schaltungsanordnung der eingangs genannten Art erfindungsgemäss dadurch, dass ein das Vorliegen oder Fehlen eines festgelegten Empfangspegels anzeigendes Pegel-Anzeigesignal und ein eine Empfangspegeländerung anzeigendes Pegeländerungs-Anzeigesignal derart miteinander verknüpft sind, dass der Ausgangskreis des genannten Verstärkers lediglich in dem Fall für eine Signalübertragung freigegeben wird, dass ein das Vorliegen des festgelegten Pegels anzeigendes Pegel-Anzeigesignal zugleich mit dem das Unterschreiten einer festgelegten Pegeländerung anzeigenden Pegeländerungs-Anzeigesignal vorhanden ist.

Die Erfindung bringt den Vorteil mit sich, dass mit einem insgesamt relativ geringen schaltungstechnischen Aufwand ausgekommen werden kann, um den Empfangszweig der Übertragungseinrichtung erst dann für einen Datensignalempfang wirksam zu steuern, wenn die diesen Empfangszweig beeinflussenden Kompensationseinstellungen praktisch abgeschlossen sind, das heisst, dass zum einen ein ausreichender Empfangspegel vorliegt und dass zum anderen keine starke Pegeländerung des Kompensationssignals und damit auch des Empfangssignals mehr auftritt. Dann kann nämlich angenommen werden, dass ein ordnungsgemässer Datenempfang abgewickelt werden kann bzw. vorliegt.

Zweckmässigerweise ist bei Verwendung eines in seiner Verstärkung digital durch jeweils mehrere Bits einstellbaren Verstärkers eine Pegelüberwachungseinrichtung vorgesehen, die zu unmittelbar aufeinanderfolgenden Verstärkungs-Einstellzeitpunkten auftretende Digitalsignale auf das Vorhandensein bestimmter Bit-Muster-Unterschiede überwacht. Hierdurch ergibt sich der Vorteil, dass auf relativ einfache Weise der jeweilige Pegel und die jeweilige Pegeländerung ermittelt werden können.

Vorzugsweise enthält die zuvor erwähnte Pegelüberwachungseinrichtung ein Register mit Paralleleingängen und Parallelausgängen und einen Addierer, über den die Pegelausgänge des Registers mit den entsprechenden Paralleleingängen verbunden sind. Ferner ist an einem Paralleleingang und an dem zugehörigen Parallelausgang des betreffenden Registers ein Exclusiv-ODER-Glied eingangsseitig angeschlossen. An dem höherwertigen Paralleleingang des betreffenden Registers ist ein weiteres Exclusiv-ODER-Glied mit einem Eingang angeschlossen. An dem dem genannten weiteren Paralleleingang zugehörigen Parallelausgang des genannten Registers ist der Signaleingang eines bistabilen D-Kippgliedes angeschlossen, welches mit seinem Takteingang am Ausgang des ersten Exclusiv-ODER-Gliedes und mit seinem Ausgang mit dem anderen Eingang des zweiten Exclusiv-ODER-Gliedes verbunden ist. Die Ausgänge der beiden Exclusiv-ODER-Glieder sind mit den Eingängen eines UND-Gliedes verbunden. Hierdurch ergibt sich der Vorteil einer besonders wirksamen, dennoch aber relativ einfach aufbaubaren Pegelüberwachungseinrichtung, die sich relativ leicht in integrierter Schaltungstechnik ausführen lässt.

Vorzugsweise ist das Ausgangssignal des vorstehend erwähnten UND-Gliedes über eine invertierende Verzögerungsstufe mit einem Signal verknüpft, das einer festgelegten Verstärkung bzw. einem entsprechenden Bit-Muster des Registers

entspricht. Mit diesem Ausgangssignal wird die Übertragungsfähigkeit des Empfangszweiges gesteuert. Hierdurch ergibt sich der Vorteil, dass die vorstehend betrachtete Pegelüberwachungseinrichtung sowohl für die Ermittlung des jeweiligen Pegels als auch der jeweiligen Pegeländerung ausgenutzt werden kann.

Anhand von Zeichnungen wird die Erfindung nachstehend beispielsweise näher erläutert.

Figur 1 zeigt in einem Blockschaltbild eine Schaltungsanordnung gemäss der Erfindung.

Figur 2 zeigt in einem detaillierten Blockschaltbild den möglichen Aufbau einer bei der Schaltungsanordnung gemäss Figur 1 verwendeten Pegelüberwachungseinrichtung.

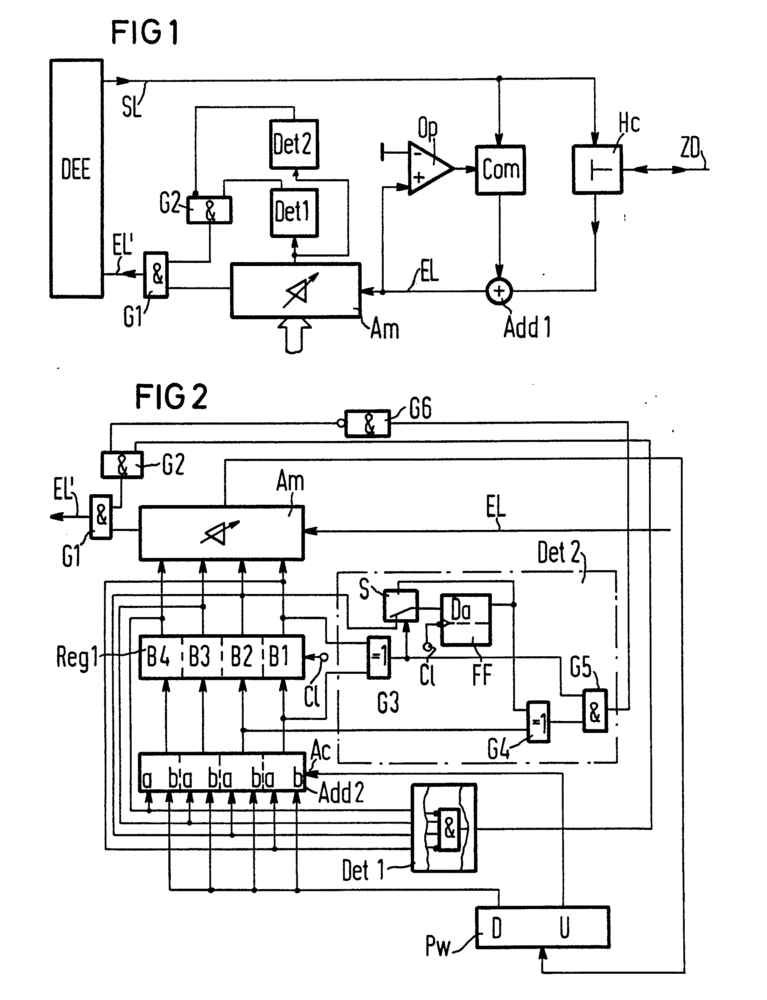

Die in Figur 1 dargestellte Schaltungsanordnung weist eine Vierdraht-Übertragungsleitung mit einer zu einem Sendezweig gehörenden Sendeleitung SL und mit einer zu einem Empfangszweig gehörenden Empfangsleitung EL bzw. EL' auf. An der Sendeleitung SL und an der Empfangsleitung EL' ist gemäss Figur 1 ein Datenendgerät DEE angeschlossen, bei dem es sich um ein Gerät handeln mag, welches sowohl Datensignale abzugeben als auch Datensignale aufzunehmen vermag.

Die vorstehend erwähnte Vierdraht-Übertragungsleitung ist über eine Gabelschaltung Hc mit einer Zweidraht-Übertragungsleitung ZD verbunden, die für eine Vollduplex-Datensignalübertragung ausnutzbar ist.

Mit der Sendeleitung SL ist ferner der eine Eingang eines Echo-Kompensationsnetzwerkes Com verbunden, welches ausgangsseitig an einem Eingang eines Addierers Add1 angeschlossen ist, der mit einem weiteren Eingang an dem auf der Seite der Vierdraht-Übertragungsleitung befindlichen Ausgang der Gabelschaltung HC angeschlossen ist. Das betreffende Echo-Kompensationsnetzwerk Com ist mit einem Steuereingang am Ausgang eines Steuerverstärkers Op angeschlossen, bei dem es sich beispielsweise um einen Operationsverstärker handeln mag, der mit seinem invertierenden Eingang − an Erde bzw. Masse liegt und der mit seinem nichtinvertierenden Eingang + am Ausgang des vorstehend erwähnten Addierers Add1 und damit an der Empfangsleitung EL angeschlossen ist.

In den Empfangszweig der Vierdraht-Übertragungsleitung ist gemäss Figur 1 ein Verstärker Am eingefügt, der ein hinsichtlich seiner Verstärkung einstellbarer, und zwar insbesondere digital einstellbarer Verstärker sein mag. Die Verstärkung des Verstärkers Am soll dabei durch Binärsignale einstellbar sein, die entsprechenden Steuereingängen dieses Verstärkers zugeführt werden. Der Verstärker Am ist ausgangsseitig mit einem Eingang eines UND-Gliedes G1 verbunden, welches ausgangsseitig über die bereits erwähnte Empfangsleitung EL' an einem entsprechenden Datensignaleingang des Datenendgerätes DEE angeschlossen ist. Mit einem weiteren Eingang ist das betreffende UND-Glied G1 am Ausgang eines Verknüpfungsgliedes G2 angeschlossen, bei dem es sich um ein UND-Glied oder um ein Sperrglied handeln mag. Das Verknüpfungsglied G2 ist mit einem Signaleingang am Ausgang eines der Pegelüberwachung dienenden Detektors Det1 und mit einem weiteren Eingang bzw. Sperreingang am Ausgang eines Pegeländerungs-Detektors Det2 angeschlossen. Die beiden Detektoren Det1 und Det2 sind eingangsseitig gemeinsam mit dem Verstärker Am verbunden, und zwar an einer solchen Stelle, dass sie den jeweiligen Pegel bzw. die jeweilige Pegeländerung des Pegels des Verstärkers Am zu ermitteln vermögen.

Nachdem zuvor der Aufbau der in Figur 1 dargestellten Schaltungsanordnung erläutert worden ist, sei nunmehr kurz die Arbeitsweise dieser Schaltungsanordnung betrachtet. Mit Hilfe der die beiden Detektoren Det1 und Det2 sowie die beiden Verknüpfungsglieder G1 und G2 umfassenden Anordnung liegt eine Pegelüberwachungseinrichtung vor, deren Detektor Det1 das Vorliegen oder Fehlen eines festgelegten Pegels in dem Empfangssignal ermittelt, welches der Verstärker Am abgibt. Der Detektor Det2 ermittelt hingegen das Vorliegen einer Pegeländerung innerhalb einer festgelegten Zeitspanne. Die diese Grössen anzeigenden Signale sind mittels der beiden Verknüpfungsglieder G1 und G2 so miteinander verknüpft, dass der Ausgangskreis des Verstärkers Am lediglich in dem Fall für eine Signalübertragung freigegeben ist − in diesem Fall ist das UND-Glied G1 übertragungsfähig −, dass ein das Vorliegen des festgelegten Pegels anzeigendes Pegel-Anzeigesignal vom Ausgang des Detektors Det1 und zugleich ein das Unterschreiten einer festgelegten Pegeländerung innerhalb der festgelegten Zeitspanne anzeigendes Pegeländerungs-Anzeigesignal von dem Detektor Det2 her vorhanden sind.

Nunmehr sei die in Figur 2 als eine mögliche Realisierungsform gezeigte Pegelüberwachungseinrichtung näher betrachtet. Wie in Figur 1 ist auch in Figur 2 der Verstärker Am angedeutet, der eingangsseitig an der Empfangsleitung EL angeschlossen ist und der ausgangsseitig mit dem einen Eingang des UND-Gliedes G1 verbunden ist, welches ausgangsseitig an der Empfangsleitung EL' angeschlossen ist. Mit einem weiteren Eingang ist das UND-Glied G1 gemäss Figur 2 am Ausgang des Verknüpfungsgliedes G2 angeschlossen, dessen eingangsseitige Verbindung mit dem übrigen Schaltungsteil gemäss Figur 2 weiter unten noch näher betrachtet werden wird.

Der Verstärker Am ist gemäss Figur 2 mit einer Reihe von Einstelleingängen am Ausgang einzelner Registerstufen B1, B2, B3 bzw. B4 eines Registers Reg1 angeschlossen, bei dem es sich um ein Register mit Paralleleingängen und Parallelausgängen handelt.

Das Register Reg1, welches an einem Steuerbzw. Takteingang C1 Taktimpulse zugeführt erhält, ist mit seinen Paralleleingängen an Ausgängen von einzelnen Addierstufen eines Volladdierers Add2 angeschlossen, der mit seinen einen Eingängen, die als a-Eingänge bezeichnet sind, an den entsprechenden Parallelausgängen der Registerstufen B1 bis B4 des Registers Reg1 angeschlossen ist. Damit ist jede der Registerstufen B1 bis B4 des Registers Reg1 ausgangsseitig und eingangsseitig über eine Addierstufe des Addierers Add2 verbunden.

Mit den anderen Eingängen der Addierstufen des Volladdierers Add2 – diese Eingänge werden als b-Eingänge bezeichnet – ist gemäss Figur 2 der D(Down)-Ausgang einer eingangsseitig an einem Signal- oder Steuerausgang des Verstärkers Am angeschlossenen Pegelüberwachungs- bzw. Schwellwerteinrichtung Pw verbunden, die eine Pegelüberwachung in bezug auf einen vorgegebenen Pegel- bzw. Schwellwert vorzunehmen vermag. Ein Signal an dem Anschluss D bewirkt wertmässig eine Verringerung des Registerinhalts des Registers Reg und damit in dem Verstärker Am eine entsprechende Verstärkungsänderung. Der Übertrags- bzw. «Carry-In»-Eingang Ac des Volladdierers Add1 ist mit dem U(Up)-Ausgang der Schwellwerteinrichtung Pw verbunden. Ein Signal an diesem Anschluss bewirkt, dass der Registerinhalt des Registers Reg1 im Wert erhöht wird, womit eine entsprechende Verstärkungsänderung verbunden ist.

An den Ausgängen der Registerstufen des gerade betrachteten Registers Reg1 ist gemäss Figur 2 der Pegel-Detektor Det1 eingangsseitig angeschlossen. Dieser Pegel-Detektor Det1 ist in Figur 2 als ein Pegeldetektor angedeutet, der ein Verknüpfungsglied aufweist. Es dürfte jedoch einzusehen sein, dass der Pegel-Detektor Det1 prinzipiell auch eine Mehrzahl von Verknüpfungsgliedern aufweisen kann, die ausgangsseitig dann ein bestimmtes Signal, beispielsweise ein Binärsignal «1» liefern, wenn eine einem festgelegten Pegel entsprechende Bit-Kombination an der Eingangsseite des betreffenden Detektors vorhanden ist. Bezüglich des Pegel-Detektors Det1 sei noch angemerkt, dass dieser ausgangsseitig mit dem Signaleingang des oben erwähnten Verknüpfungsgliedes G2 verbunden ist.

Mit dem Eingang und mit dem Ausgang der Registerstufe B1 des Registers Reg1 ist ein Exclusiv-ODER-Glied G3 eingangsseitig verbunden. Ausgangsseitig ist das betreffende Exclusiv-ODER-Glied mit dem Steuereingang eines Schalters S und mit einem Eingang eines UND-Gliedes G5 verbunden. Das betreffende UND-Glied G5 ist mit einem weiteren Eingang am Ausgang eines weiteren Exclusiv-ODER-Gliedes G4 angeschlossen, welches mit seinem einen Eingang am Eingang der Registerstufe B2 des Registers Reg1 und mit seinem anderen Eingang am nichtinvertierenden Ausgang eines bistabilen D-Kippgliedes angeschlossen ist. Dieses D-Kippglied FF ist mit seinem Dateneingang Da am Umschaltkontakt des Umschalters S angeschlossen, der in seiner einen Stellung («0»-Stellung) mit dem Ausgang des D-Kippgliedes verbunden ist und der in seiner anderen Stellung («1»-Stellung) am Ausgang der Registerstufe B2 des Registers Reg1 angeschlossen ist. Dem Takteingang des D-Kippgliedes werden die Takt- bzw. Steuerimpulse zugeführt, die auch dem Takteingang C1 zugeführt werden. Das betreffende D-Kippglied FF bildet zusammen mit den betrachteten Verknüpfungsgliedern G3, G4, G5 und dem Verzögerungsglied G6 den Pegeländerungs-Detektor Det2. Der Ausgang des UND-Gliedes G5 des betreffenden Detektors Det2 ist über ein invertierendes Verzögerungsglied G6 mit dem einen Eingang des oben bereits erwähnten Verknüpfungsgliedes G2 verbunden.

Nachdem zuvor der Aufbau der in Figur 2 dargestellten Pegelüberwachungseinrichtung erläutert worden ist, sei nunmehr die Arbeitsweise dieser Einrichtung kurz betrachtet. Zunächst sei angenommen, dass in das Register Reg1 eine solche Binärzahl geladen ist, dass der Pegel-Detektor Det1 ausgangsseitig ein Binärsignal «0» abgibt. Dies hat zur Folge, dass das Verknüpfungsglied G2 ebenfals ein Binärsignal «0» abgibt und damit auch das UND-Glied G1 gesperrt ist, so dass von dem Verstärker Am gegebenenfalls abgegebene Signale nicht zu der Empfangsleitung EL' gelangen können.

Wird über die Leitung EL dem Verstärker Am ein entsprechend grosser Pegel zugeführt, so wird vom Anschluss U(Up) der Schwellwerteinrichtung Pw dem Addierer Add2 ein Wert +1 zugeführt. Jeder derartige Wert +1 bewirkt, dass die dem betreffenden Addierer Add2 eingangsseitig zugeführte Binärzahl ausgangsseitig im Wert um 1 vergrössert abgegeben wird. Die von den Ausgängen des Addierers Add2 abgegebene Binärzahl steht nunmehr an den Paralleleingängen des Registers Reg1 an und wird durch die Registerstufen B1 bis B4 des Registers mit Auftreten des nächsten Taktimpulses am Takteingang C1 übernommen. Anschliessend geben die Parallelausgänge der Registerstufen B1 bis B4 des Registers Reg1 die betreffende Binärzahl an die Eingänge des Addierers Add2 und an die Eingänge des Pegel-Detektors Det1 ab. Wenn der festgelegte Pegel noch nicht erreicht ist, gibt der betreffende Pegel-Detektor Det1 weiterhin an seinem Ausgang ein Binärsignal «0» ab. Dies entspricht dann auch den vorstehend erläuterten Verhältnissen. Hat der Pegel-Detektor Det1 indessen das Überschreiten des festgelegten Pegels ermittelt, so gibt er von seinem Ausgang ein Binärsignal «1» ab, was zur Folge hat, dass nunmehr das Verknüpfungsglied G2 grundsätzlich in den übertragungsfähigen Zustand gesteuert werden kann. Um das betreffende Verknüpfungsglied G2 in den übertragungsfähigen Zustand zu steuern und damit die Weiterleitung von Datensignalen über das UND-Glied G1 zu ermöglichen, ist es erforderlich, dass vom Ausgang des UND-Gliedes G5 ein Binärsignal «0» abgegeben wird. Die Voraussetzungen dafür werden nachstehend näher erläutert.

Befindet sich in dem Register Reg1 von der Registerstufe B4 ausgehend die Bit-Kombination 0000, so sei dies kennzeichnend für eine Einstellung des Verstärkers Am, die noch unzureichend ist. Mit der um 1 erfolgenden Erhöhung dieser Bit-Kombination wird den Eingängen dieser Registerstufen die neue Bit-Kombination 0001 zugeführt. In diesem Fall gibt das Exclusiv-ODER-Glied G3 ein Binärsignal «1» ab, welches dem Steuereingang des Schalters S und dem einen Eingang des UND-Gliedes G5 zugeführt wird. Mit dem Auftreten dieses Signals übernimmt das D-Kippglied FF mit dem nächsten Taktimpuls am Takteingang C1 das an seinem Dateneingang Da zu dem betreffenden Zeitpunkt anliegende Signal der Registerstufe B2 (Binärsignal «0»). Dies bedeutet, dass vom Ausgang des Exclusiv-ODER-Gliedes G4 weiterhin ein Binärsignal «0» abgegeben wird. Das UND-Glied G5 gibt damit ebenfalls ein Binärsignal «0» ab. Wenn nun eine weitere Erhöhung um 1 im Addierer Add2 vorgenommen wird, dann wird den Paralleleingängen der Registerstufen B4 bis B1 des Registers Reg1 die Bit-Kombination 0010 zugeführt. Dies hat zur Folge, dass vom Ausgang des Exclusiv-ODER-Gliedes G3 wieder ein Binärsignal «1» abgegeben wird und dass wiederum vom Ausgang des D-Kippgliedes FF ein Binärsignal «0» abgegeben wird. Im Unterschied zu dem zuvor betrachteten Fall liegt nunmehr am anderen Eingang des Exclusiv-ODER-Gliedes G4 ein Binärsignal «1», was zur Folge hat, dass in diesem Fall an beiden Eingängen des UND-Gliedes G5 jeweils ein Binärsignal «1» liegt. Damit gibt das UND-Glied G5 nunmehr von seinem Ausgang ein Binärsignal «1» ab, das über das invertierende Verzögerungsglied G6 zur Sperrung des Verknüpfungsgliedes G2 führt.

Der Übergang von der vorstehend betrachteten Bit-Kombination 0000 über die Bit-Kombination 0001 auf die Bit-Kombination 0010 – wobei es, genauer gesagt, lediglich auf die zweimalige Erhöhung (oder Verminderung – 01/10) in den Registerstufen B1 und B2 des Registers Reg1 ankommt – kennzeichnet eine solche Pegeländerung, bei der das Verknüpfungsglied G2 gesperrt wird. Dies kommt dadurch zustande, dass das Ausgangssignal des D-Kippgliedes FF dem Zustand der Registerstufe B1 um jeweils eine Änderung von der Registerstufe B1 her – angezeigt durch das Exclusiv-ODER-Glied G3 – hinterhereilt und dass die Änderung des Ausgangspegels der Registerstufe B2 dem Pegel am Eingang dieser Registerstufe hinterhereilt. Zwischen dem Eingangspegel bzw. Eingangssignal der Registerstufe B2 und dem Ausgangspegel des D-Kippgliedes FF liegen also – zeitlich gesehen – zwei Zustandsänderungen bezogen auf die Registerstufe B1. Eine Ungleichheit zwischen dem Ausgangssignal des D-Kippgliedes FF und dem Eingangssignal der Registerstufe B2 wird also nur bei dauernder Erhöhung (oder Verminderung) erkannt und am Ausgang des Exclusiv-ODER-Gliedes G4 als Binärsignal «1» angezeigt. Damit gibt das UND-Glied G5 ein Binärsignal «1» ab, welches über das invertierende Verzögerungsglied G6 das Verknüpfungsglied G2 und damit das UND-Glied G1 für die Übertragung sperrt.

Nachdem bei nicht ausreichendem Pegel das Verknüpfungsglied G2 vom Ausgang des Pegeldetektors Det1 her gesperrt wird, wird bei starken Änderungen der Bit-Kombination des Registers Reg1 – gekennzeichnet durch eine zweimalige Erhöhung oder Verminderung der betreffenden Bit-Kombination – das Verknüpfungsglied G2 vom Ausgang des Pegeldetektors Det2 her gesperrt.

Demgemäss wird dann, wenn die Bit-Kombination in den Registerstufen B1 bis B4 des Registers Reg1 erhalten bleibt – das heisst, dass kein weiterer Additionsumlauf mehr stattfindet bzw. nurmehr ein dauerndes Aufwärts-Abwärts-Aufwärts-Abwärts... usw. erfolgt, welches stets zum selben Binärzustand zwischen dem Ausgangssignal des D-Kippgliedes FF und dem Eingangssignal der Registerstufe B2 führt – vom Pegeländerungs-Detektor Det2 ein Binärsignal «0» abgegeben. Daraufhin gibt das Verknüpfungsglied G2 von seinem Ausgang ein Binärsignal «1» an das UND-Glied G1 ab, welches daraufhin die vom Ausgang des Verstärkers Am abgegebenen Signale an die Empfangsleitung EL' weiterleitet.

Die vorstehende Erläuterung der in Figur 2 dargestellten Pegelüberwachungseinrichtung dürfte somit gezeigt haben, dass nicht nur die absolute Höhe des jeweiligen Pegels als Kriterium dafür herangezogen wird, ob vom Ausgang des Verstärkers Am Datensignale an die Empfangsleitung EL' weitergeleitet werden können oder nicht, sondern dass überdies auftretende Pegeländerungen, das heisst die diese hervorrufenden Verstärker-Einstellsignale, hierfür mit herangezogen werden. Erst wenn die betreffende Pegeländerung einen festgelegten Wert unterschritten hat, nämlich zur Ruhe gekommen ist, dann wird dies bei Vorliegen eines ausreichenden Signalpegels als Kriterium dafür herangezogen, dass die von dem Verstärker Am abgegebenen Signale an die Empfangsleitung EL' weiterzuleiten sind.

Bezüglich des oben erwähnten invertierenden Verzögerungsgliedes G6 sei noch angemerkt, dass dessen Verzögerungsdauer zweckmässigerweise so gewählt sein wird, dass die Einschwingzeit des Verstärkers (nach dessen Einstellung) erfasst ist; die betreffende Verzögerungsdauer stellt damit eine Sicherheitszeitspanne dar.

## Patentansprüche

1. Schaltungsanordnung zur Steuerung der Übertragungsfähigkeit des Empfangszweiges einer den Empfangszweig und einen davon getrennten Sendezweig aufweisenden Übertragungseinrichtung, die mit einem Sender und einem Empfänger über eine Gabelschaltung (Hc) mit einer Zweidraht-Übertragungsleitung (ZD) verbunden ist, wobei zwischen dem Sendezweig und dem Empfangszweig der Übertragungseinrichtung ein Echo-Kompensationsnetzwerk (Com, Op, Add1) vorgesehen ist und wobei in dem Empfangszweig ein Verstärker (Am) vorhanden ist, dadurch gekennzeichnet, dass ein das Vorliegen oder Fehlen eines festgelegten Empfangspegels anzeigendes Pegel-Anzeigesignal und ein eine Empfangspegeländerung anzeigendes Pegeländerungs-Anzeigesignal derart miteinander verknüpft sind, dass der Ausgangskreis des genannten Verstärkers (Am) lediglich in dem Fall für eine Signalübertragung freigegeben ist, dass ein das Vorliegen des festgelegten Pegels anzeigendes Pegel-Anzeigesignal und zugleich ein das Unterschreiten einer festgelegten Pegeländerung anzeigendes Pegeländerungs-Anzeigesignal vorhanden sind.

2. Schaltungsanordnung nach Anspruch 1, dadurch gekennzeichnet, dass bei Verwendung eines in seiner Verstärkung digital durch jeweils mehrere Bits einstellbaren Verstärkers (Am) eine Pegelüberwachungseinrichtung (Det1, Det2, G2, G1) vorgesehen ist, die zu unmittelbar aufeinanderfolgenden Verstärkungs-Einstellzeitpunkten auftretende Digitalsignale auf das Vorhandensein bestimmter Bit-Muster-Unterschiede überwacht.

3. Schaltungsanordnung nach Anspruch 2, dadurch gekennzeichnet, dass die Pegelüberwachungseinrichtung ein taktgesteuertes Register (Reg1) mit Paralleleingängen und Parallelausgängen und einen Addierer (Add2) enthält, über den die Parallelausgänge des Registers (Reg1) mit dessen entsprechenden Paralleleingängen verbunden sind, dass an einem Paralleleingang und an dem zugehörigen Parallelausgang des Registers (Reg1) ein Exclusiv-ODER-Glied (G3) eingangsseitig angeschlossen ist, dass an einem weiteren Paralleleingang des Registers (Reg1) ein weiteres Exclusiv-ODER-Glied (G4) mit seinem Eingang angeschlossen ist, dass an dem dem genannten weiteren Paralleleingang zugehörigen Parallelausgang des Registers (Reg1) ein Signaleingang (Da) eines taktgesteuerten bistabilen Kippgliedes (FF) über einen Schalter (S) angeschlossen ist, der vom Ausgang des genannten einen Exclusiv-ODER-Gliedes (G3) her betätigbar ist, dass das bistabile Kippglied (FF) über den genannten Schalter (S) mit seinem (nichtinvertierenden) Ausgang verbunden ist, mit dem ferner der andere Eingang des genannten weiteren Exclusiv-ODER-Gliedes verbunden ist, und dass die Ausgänge der beiden Exclusiv-ODER-Glieder (G3, G4) mit den Eingängen eines UND-Gliedes (G5) verbunden sind.

4. Schaltungsanordnung nach Anspruch 3, dadurch gekennzeichnet, dass das Ausgangssignal des UND-Gliedes (G5) über eine invertierende Verzögerungsstufe (G6) mit einem Signal, welches einer festgelegten Verstärkung bzw. dem entsprechenden Bit-Muster in dem Register (Reg1) entspricht, zu einem die Übertragungsfähigkeit des Empfangszweiges steuernden Steuersignal verknüpft ist.

## Claims

1. A circuit arrangement for controlling the transmission capacity of the receiving arm of a transmission device which comprises the receiving arm and a separate transmitting arm and is connected by a transmitter and a receiver to a two-wire transmission line (ZD) via a hybrid circuit (Hc) where an echo compensation network (Com, Op, Add1) is arranged between the transmitting arm and the receiving arm of the transmission device, and where the receiving arm contains an amplifier (Am), characterised in that a level display signal, which indicates the presence or absence of a stipulated receiving level, and a level-change display signal, which indicates a change in the receiving level, are logic-linked to one another such that the output circuit of the aforesaid amplifier (Am) is enabled for signal transmission only when a level-display signal indicating the presence of the stipulated level, and a level-change display signal indicating that a stipulated level change has been undershot, occur simultaneously.

2. A circuit arrangement as claimed in claim 1, characterised in that when an amplifier (Am) whose amplification can be digitally adjusted by a plurality of bits is used, a level monitoring device (Det1, Det2, G2, G1) is provided which monitors digital signals, occurring at directly consecutive amplification adjustment times, to establish the presence of specific bit pattern differences.

3. A circuit arrangement as claimed in claim 2, characterised in that the level monitoring device contains a clock-controlled register (Reg1) having parallel inputs and parallel outputs, and an adder (Add2) via which the parallel outputs of the register (Reg1) are connected to the corresponding parallel inputs thereof, that a EXCLUSIVE-OR gate (G3) is connected by its input to a parallel input and to the associated parallel output of the register (Reg1), that a further EXCLUSIVE-OR gate (G4) is connected by its input to a further parallel input of the register (Reg1), that the parallel output of the register (Reg1) assigned to the aforesaid further parallel input, is connected to a signal input (Da) of a clock-controlled bistable flip-flop (FF) via a switch (S) which can be actuated from the output of the aforesaid first EXCLUSIVE-OR gate (G3), that the bistable flip-flop (FF) is connected via the aforesaid switch (S) to its (non-inverting) output to which the other input of the aforesaid further EXCLUSIVE-OR gate is likewise connected; and that the outputs of the two EXCLUSIVE-OR gates (G3, G4) are connected to the inputs of a AND gate (G5).

4. A circuit arrangement as claimed in claim 3, characterised in that the output signal of the AND gate (G5) is logic-linked via an inverting delay stage (G6) to a signal corresponding to a stipulated amplification and to the corresponding bit pattern in the register (Reg1) to form a control signal which controls the transmission capacity of the receiving arm.

## Revendications

1. Montage pour commander la capacité de transmission de la voie de réception d'un dispositif de transmission comportant la voie de réception et une voie d'émission séparée de la voie de réception, et qui est relié, par un émetteur et un récepteur, par l'intermédiaire d'un termineur (Hc) à une ligne bifilaire de transmission (ZD), et dans lequel un réseau de compensation d'échos (Com, Op, Add1) est prévu entre la branche d'émission et la branche de réception du dispositif de transmission et un amplificateur (Am) est monté dans la branche de réception, caractérisé par le fait qu'un signal indicateur de niveau, qui indique la présence ou l'absence d'un niveau de réception déterminé, et un signal d'indication de variation de niveau, indiquant une variation du niveau de réception, sont combinés entre eux de telle sorte que le circuit de sortie dudit amplificateur (Am) est libéré pour la transmission de signaux uniquement lorsqu'un signal indicateur de niveau, indiquant la présence du niveau déterminé, et simultanément un signal indicateur de variation de niveau, indiquant que la variation de niveau est inférieure à une variation de niveau prédéterminée, sont présents.

2. Montage suivant la revendication 1, caractérisé par le fait que, dans le cas de l'utilisation d'un amplificateur (Am), dont l'amplification est réglable par voie numérique au moyen de plusieurs bits respectifs, il est prévu un dispositif (Det1, Det2, G2, G1) de contrôle du niveau, qui contrôle des signaux numériques apparaissant à des instants de réglage de l'amplification qui se succèdent directement, pour voir s'ils présentent des différences déterminées dans leur profils binaires.

3. Montage suivant la revendication 2, caractérisé par le fait que le dispositif de contrôle de niveau contient un registre (Reg1) commandé de façon cadencée et comportant des entrées en parallèle et des sorties en parallèle et un additionneur (Add2), par l'intermédiaire duquel les sorties en parallèle du registre (Reg1) sont reliées aux entrées en parallèle correspondantes de ce registre, qu'un circuit OU-Exclusif (G3) est raccordé, côté entrée, à une entrée en parallèle et à la sortie en parallèle, associée, du registre (Reg1), qu'un second circuit OU-Exclusif (G4) est raccordé par son entrée à une autre entrée en parallèle du registre (Reg1), qu'une entrée de signaux (Da) d'un circuit à bascule bistable (FF) commandé de façon cadencée est raccordée à ladite autre entrée en parallèle du registre (Reg1), associée à ladite autre entrée en parallèle, par l'intermédiaire d'un commutateur (S) qui peut être actionné par la sortie dudit premier circuit OU-Exclusif (G3), que le circuit à bascule bistable (FF) est relié par l'intermédiaire dudit commutateur (S) à sa sortie (non inverseuse), à laquelle est en outre reliée l'autre entrée dudit second circuit OU-Exclusif, et que les sorties des deux circuits OU-Exclusif (G3, G4) sont reliées aux entrées d'un circuit ET (G5).

4. Montage suivant la revendication 3, caractérisé par le fait que le signal de sortie du circuit ET (G5) est combiné, par l'intermédiaire d'un étage de retard (G6) réalisant une inversion, à un signal qui correspond à une amplification déterminée ou au profil binaire correspondant présent dans le registre (Reg1), pour former un signal de commande commandant la capacité de transmission de la branche de réception.

# FIG 1

# FIG 2